# EUROPEAN PATENT APPLICATION

(11) **EP 2 857 374 A1**
(43) Date of publication of application: **08.04.2015**
(21) Application number: 13468003.2
(22) Date of filing: 23.10.2013
(51) Int. Cl.: C04B 35/453, H01C 7/10, H01C 7/112, H01C 7/115, H01B 1/06

(54) **Method for manufacturing varistor ceramics and varistors having low leakage current**

(30) Priority: 02.10.2013 SI 201300306
(71) Applicant: Razvojni Center eNem Novi Materiali d.o.o., 1410 Zagorje ob Savi (SI)
(72) Inventor: Slavko, Bernik, 1231 Ljubljana - ?rnu?e (SI); Alojz, Tav?ar, 1236 Trzin (SI)
(74) Representative: Flak, Antonija

(57) **Abstract**

The invention belongs to the field of metal oxide varistors and methods for manufacturing thereof, more precisely to the field of methods and manufacturing of varistors having low leakage current and stable leakage current.

The essence of the method for manufacturing varistor ceramics and varistors having low leakage current of the invention lies in that to a conventional composition of varistor ceramics SiO₂ is added in a range from 0.01 to 0.5, preferably to 0.3 mol. % without affecting the nominal voltage and non-linearity of the varistor ceramics.

According to the method, the SiO₂ additives are included in the Bi₂O₃ phase and do not yet cause a formation of the Zn₂SiO₄ phase.

## Description

### Field of Invention

The invention belongs to the field of metal oxide varistors and methods for manufacturing thereof, more precisely to the field of methods and manufacturing of varistors having low leakage current and stable leakage current.

### Technical Problem

The technical problem solved by the present invention is a method for manufacturing varistor ceramics for the production of varistors having low leakage current and stable leakage current by modifying varistor ceramics based on ZnO and the oxides of Bi, Sb and/or Ti, Co, Mn, Ni and Cr and by defining an additive or rather a suitable quantity of SiO₂. The problem set in the method for manufacturing varistor ceramics is to define a quantity of SiO₂ additives to keep leakage current low and stabilized in low-voltage varistor ceramics by adding TiO₂ or TiO₂ and Sb₂O₃. The method should allow a more equal distribution of finer dopants on each intergranular boundary, more equal distributions of ZnO grains, an inhibited growth of grains within the range of several microns, and a higher concentration of finer dopants on a thin intergranular ZnO layer. The method must allow manufacturing of a varistor with medium- and high-voltage Sb₂O₃-based additives, wherein their nominal voltage and non-linearity coefficient α should not be affected.

The method for manufacturing should be designed in a way that the set goal of manufacturing varistor ceramics and varistors having low and stable leakage current is achieved by adding additives and by determining the quantity thereof. The set goal of the invention is a method for manufacturing varistor ceramics that will exhibit lower porosity, higher density and a more equal distribution of mineral phases and consequently a more equal heat distribution and less local overheating as is the case with conventional varistors.

Despite the complexity of varistor ceramics and varistors, the core problem in the use thereof relates to leakage current. The method must reduce causes resulting in a problem of leakage current. The general significance of an output composition of varistor ceramics and its varied balance regarding additions of individual varistor dopants and ratios between them, of efficient homogenisation of the output mixture, and finally of additional heat treatment of sintered varistor ceramics at a temperature ranging from 600 to 800 °C is left aside, which all have a positive impact on lower leakage current. Essentially, a chemical composition of varistor ceramics with all dopants added to ZnO is complicated. Addition of each new dopant is therefore questionable, as it additionally contributes to its chemical complexity and can impact, especially when higher amounts of additives are in question, development of microstructure and consequently its breakdown voltage. Addition of small quantities of acceptor dopants can affect a reduction in leakage current, they push the I-U curve to the left, however, their functioning is rarely specific only for the course of the I-U curve in the blocking stage region. Normally, they also affect the course of the I-U curve in the region of high currents, where they also push it to the left towards lower currents, which means higher residual voltage U_{R} at an electric shock and poorer energy characteristic of varistors. The nature of these dopants is often not clear-cut and is very subtly dependant on the amount of their additive and firing temperature, which results in their functioning either as acceptors or donors. In this relation, addition of SiO₂ has proved to have numerous advantages. At low amounts of additives it causes a considerable reduction in leakage current both in low- and high-voltage varistor ceramics, it does not impact the non-linearity coefficient α or increases it at the best, and it does not exert significant influence on the breakdown voltage of varistor ceramics. The functioning of the SiO₂ additive can be contributed to the influence on the nature of the Bi₂O₃ phase at boundaries between grains, so that preferably a stable Bi₂O₃ modification with low conductivity occurs. It further has influence on the wettability of the Bi₂O₃ phase on various ZnO crystallographic planes, so that ZnO grains are wetted much more equally.

### Leakage current problem in varistor ceramics

Leakage current (I_{L}) flowing through a varistor at normal operating voltage below its nominal voltage accounts for ohmic losses due to which the varistor gets heated. Heating of the varistor contributes to additional thermal emission of charge carriers and to increased leakage current, and consequently to further heating of the varistor and increased leakage current. In extreme cases, this process can lead to thermal destruction of the varistor. The leakage current is thus a key parameter that is reflected in the quality of varistors. Increase in leakage current with load time is representative of varistor aging and is one of key criteria used to determine time stability of varistors. Low leakage current and a suitable time stability of the leakage current are desired regardless of the varistor type and the field of use. Some types of varistors and applications are subject to extremely severe requirements for the amount of leakage current and time stability in normal operating conditions. Leakage current depends on the properties of boundaries between the grains in varistor ceramics. Due to a complex chemical composition of varistor ceramics, the leakage current is influenced by numerous parameters of its preparation and managing the leakage current is therefore very unpredictable and demanding. It is necessary to have a good knowledge of the influence of the chemical composition, of individual varistor dopants and of the temperature mode of firing on the nature and property of boundaries between the grains. This knowledge can only be confirmed by adequate empirical results.

The ZnO-based varistor ceramics is marked by an exquisite non-linearity of current-voltage (I-U) characteristic and high capacity of energy absorption. The nominal or breakdown voltage V_{N} and the non-linearity coefficient α are the fundamental parameters of the current-voltage (I-U) non-linearity of varistor ceramics and varistors that define the type of varistors and the field of their application. Varistors are applied for surge protection of devices and for stabilising voltage in networks with the operating voltage ranging from several volts up to several hundreds of volts and their nominal or breakdown voltage must be adapted thereto. In general, varistors are classified by their type to low-, medium- and high-voltage varistors. When the breakdown voltage is exceeded due to a transient voltage surge, the varistor passes from a highly ohmic to a highly conductive state, so its resistance is considerably lower than the resistance of the device it protects. The energy of the transient voltage disturbance is transferred to the varistor, the current through the varistor increases for several orders of magnitude at a small change in the voltage, which is reflected by the non-linearity coefficient α in the expression I = KV^{α} which indicates the current-voltage (I-U) non-linearity of the varistor. The current-voltage non-linearity of the varistor ceramics is a property of boundaries between the grains and derives from electrostatic barriers caused at boundaries between the ZnO grains by an addition of Bi₂O₃. An ideal varistor barrier with current-voltage non-linearity would have indefinite resistance and only at the breakdown voltage of about 3.2 V, at transition to a conductive mode, current could flow through it. In fact, as early as at voltages reaching the values considerably below 3 V per each branch in varistor ceramics a certain low leakage current flows. It increases with the increased feed voltage reaching the breakdown voltage of individual boundaries or the breakdown voltage of the varistor which is a sum of breakdown voltages of individual boundaries. The nominal voltage or the breakdown voltage of a varistor normally lies at 10 % to 20 % above the operating voltage of the device it protects. At normal operating voltage the varistor is thus constantly subject to a voltage potential closely below its breakdown voltage, so that certain leakage current I_{L} flows through it. The amount of the leakage current I_{L} and the time stability of the varistor depend on the varistor type and the composition and quality of its manufacturing.

Addition of Bi₂O₃ to ZnO is a prerequisite for formation of electrostatic barriers at boundaries between the grains and for the current-voltage non-linearity of the ZnO ceramics. ZnO varistor ceramics possessing the required properties for use with respect to the I-U non-linearity and the capacity of energy absorption is only achieved by adding other varistor dopants, such as the oxides of Sb, Ti, Co, Mn, Ni and Cr. During the firing process that is normally carried out at a temperature ranging from 1100 °C to 1300 °C a functional microstructure of varistor ceramics develops in the presence of a Bi₂O₃ melt. The Bi₂O₃ liquid phase dissolves the remaining varistor dopants and herewith considerably affects their distribution in the ZnO ceramics. The microstructure of the varistor ceramics is thus composed of ZnO grains and the Bi₂O₃ phase which forms a more or less closed web along the boundaries between the ZnO grains, in which the remaining varistor dopants are dissolved. Depending on the composition a spinel phase may be present either Zn₇Sb₂O₁₂ or Zn₂TiO₃, and a pyrochlore phase Bi₃Zn₂Sb₃O₁₁. The spinel phase is finely grained, the grains are isolated and the spinel phase in the microstructure does not form a closed phase that would have a direct influence on the I-U characteristics. At an inadequate composition and/or firing phase the pyrochlore phase is formed during cooling from the Bi₂O₃ melt and is »spilled« over the boundaries between the ZnO grains. The boundaries containing the pyrochlore phase possess an ohmic character and are not varistor active, which contributes to a higher leakage current. The pyrochlore phase is not desired in the varistor ceramics and can be avoided by using adequate process parameters.

Given the fact that transport properties of varistor ceramics completely control the electrically active boundaries between the grains, they are critically dependent on the Bi₂O₃ phase;
i) which must provide the I-U non-linearity between the ZnO grains,
ii) which must have very high resistance (approx. 10¹² Ωcm) until the breakdown voltage in order to prevent the current through the varistor ceramics or the varistor at normal operating voltage,
iii) which must be highly conductive above the breakdown voltage, and
iv) which must, after the voltage has returned to the normal operating voltage, become highly resistant again.

The Bi₂O₃ phase causes formation of electrostatic barriers at the boundaries between the ZnO grains. Their formation is linked to the presence of excess oxygen at the boundaries between the grains which is allowed by the high ionic conductivity of Bi₂O₃. The excess oxygen at the boundaries between the ZnO grains represents traps, into which charge carriers (electrons) get trapped. Due to the electrons trapped at the one and the other side of the boundary on both interphase barriers »ZnO grain/phase on the boundary« two negatively charged layers are formed. At either side of these two layers, in one and another ZnO grain, a discharged area is formed with positively charged electronic holes that compensate for the negative charge. We talk about electrostatic barriers or the so-called double Schottky barriers that prevent transport of charge carriers over the boundaries between the grains and therewith ensure high resistance of the varistor ceramics. In ideal conditions, the current might flow through the barriers only when their breakdown voltage of about 3 V would be reached. As a matter of fact, transport of various charge carriers (ions, electrons) occurs due to various causes and consequently leakage current occurs at considerably lower voltages.

The causes for the leakage current originate in the unbalance of the varistor ceramics due to its chemical and microstructural complexity. Basically, the role of varistor dopants added to ZnO in the formation of properties of the varistor ceramics is known. Bi₂O₃ is of key importance in the formation of electrostatic barriers at the boundaries between the grains, and since it forms a liquid phase it exhibits a strong influence on the development of the microstructure (thickening, growth of ZnO grains) and distribution of remaining dopants that are dissolved in the melt. A thin Bi₂O₃ layer is sufficient for the non-linearity of the boundary between two ZnO grains and based on several findings only about 0.1 mol. % of Bi₂O₃ should be added, whereas the actual additives in the varistor ceramics are at least 5-times and up to 10-times higher. The Bi₂O₃ phase is normally in an excess that is more or less homogeneously distributed in the varistor ceramics. During cooling the excess of the melt gets displaced from the ZnO-ZnO boundaries to boundaries between three grains, but a thick film of Bi₂O₃ in quite several places reaches deeply onto the boundaries between the ZnO grains. The amount of Bi₂O₃ on individual boundaries between the ZnO grains is also influenced by wettability which is different for various ZnO crystallographic planes. Sb₂O₃ and TiO₂ are the additives used to control the growth of ZnO grains and thus have influence on the breakdown voltage of the varistor ceramics which depends on the number of boundaries between the grains. A fine-grained varistor ceramics, in which Sb₂O₃ is normally added, has a higher number of boundaries and hence higher breakdown voltage per unit of thickness. In coarse-grained varistor ceramics, in which TiO₂ is usually added, there are less boundaries and its breakdown voltage is therefore lower. The varistor ceramics with Sb₂O₃ added usually has higher non-linearity, a higher non-linearity coefficient α, and lower leakage current than the TiO₂-doped ceramics. The latter usually has a considerably more unequal size of ZnO grains. This is the reason that, when transient disturbance occurs, the current is localized and »current channels« are formed in directions via the ceramics with a smaller number of grains and thus lower breakdown voltage (resistance). A consequence of breakdown voltage spread in such ceramics is lower α values. Generally, the addition of TiO₂ impairs the I-U non-linearity of the boundaries between the grains, so their average breakdown voltage is considerably lower than 3 V, which at a higher average grain size significantly contributes to the lower breakdown voltage of the ceramics. At the same time TiO₂ as a dopant has a nature of a donor, which has influence on the high current leakage in the low voltage TiO₂-doped varistor ceramics. The oxides of Co, Mn and Ni are the additives used to increase the conductivity of ZnO grains; they are included in ZnO grains at regular Zn sites and act as donors - increase the concentration of charge carriers and thus conductivity. Cr₂O₃ is an additive that affects the reactions of the pyrochlore phase BbZn₂Sb₃O₁₄ and prevents its formation from the Bi₂O₃ melt during cooling down. Cr₂O₃ acts as a donor as well.

At a given temperature and time of firing a microstructure gets formed in the varistor ceramics, in which microstructure a certain balance between the phases and dopant distribution is reached, which affects its electrical properties. A different time of firing at the same temperature or a different temperature of firing signify a new balance and somewhat different electrical properties. The Bi₂O₃ phase is more or less equally distributed over the boundaries between ZnO grains, which means a quite varied thickness of the Bi₂O₃ layer at various boundaries between ZnO grains. This is influenced by both the quantity of added Bi₂O₃ and the homogeneity of its distribution in the resultant varistor mixture. Influence is also exerted by differences in the wettability between different ZnO crystallographic planes. Despite the fact that other varistor dopants are mostly integrated into other phases in the varistor ceramics (ZnO grains, spinel phase), a small quantity of each of them always remains dissolved in the Bi₂O₃ phase and affects its properties. The Bi₂O₃ phase can also differ on various boundaries in the amount of the mentioned dopants. The thickness of the Bi₂O₃ layer and the dopants contained therein finally affect the nature of a certain boundary between two ZnO grains. Apart from ideal varistor boundaries with a breakdown voltage of 3 V the varistor ceramics also has other boundaries, the breakdown voltage of which is significantly lower or the boundaries completely lack the varistor character (I-U non-linearity) and are ohmic. The boundaries with lower breakdown voltage and especially the boundaries having the ohmic character are the reason for the leakage current in the varistor ceramics at the voltages lying below the breakdown voltage. The leakage current is further influenced also by the type or modification of the Bi₂O₃ phase at the boundaries. Bi₂O₃ is present in various structural modifications as regards temperature and the presence of impurities. At firing temperature of the varistor ceramics the high-temperature cubic δ-Bi₂O₃ (structure of a face-centred cubic) is normally stable. It has a very high ionic conductivity, which is important for enrichment of the boundaries with excess oxygen and the formation of electrostatic barriers at the boundaries between the grains. During cooling-down, this phase converts at a temperature lying below 700 °C to the γ-Bi₂O₃-modification or in the presence of impurities, to which also the varistor dopants belong, to the so-called Sillenite phase of the Bi₁₂MO₂₀ (M ... impurity) type with a structural type of a body-centred cubic. At a temperature lying below 500 °C γ-Bi₂O₃ can convert to a low-temperature monoclinic modification α-Bi₂O₃. This is less likely in the presence of impurities that stabilize γ-Bi₂O₃. δ-Bi₂O₃ can, however, especially during a more rapid cooling down at temperatures below 650 °C, convert to the metastable modification β-Bi₂O₃. It is desired for the properties of the varistor ceramics that the stable γ-Bi₂O₃ or the Sillenite phase is obtained which is predominantly an ionic conductor, yet with a considerably lower ionic conductivity than δ-Bi₂O₃. As low electronic conductivity as possible and of course the ionic conductivity of the Bi₂O₃ phase at the boundaries between the grains is important for low leakage current. Low ionic conductivity and consequently low mobility of oxygen ions are important for the stability of electrostatic barriers, for which the excess oxygen on the boundaries is of key importance. The stability of the Sillenite phase depends on the cation that dopes it; the larger the M cation in the Sillenite phase of Bi₁₂MO₂₀, the lower its stability. Silicon is one of the smallest cations that stabilizes the Sillenite phase, and Bi₁₂SiO₂₀ belongs to the most stable Sillenite phases and exhibits a very high electric resistance of 5×10¹³ Ωcm. High leakage current is also caused by segregation of donor dopants at the boundaries between the grains, where a majority of varistor dopants, which increase the concentration of free charge carriers, belong. It is therefore of utter importance that they are embedded in the stable Bi₂O₃ phase in an as stable way as possible. Based on that, a suitable addition of SiO₂ to the varistor ceramics can certainly have a positive influence. It is known that subsequent thermal treatment at temperatures ranging from 600 °C to 800 °C contributes to lower leakage current and better stability of the varistor ceramics. This treatment probably contributes to complete transformation of the Bi₂O₃ phase to the stable modification of γ-Bi₂O₃ or the Sillenite phase.

### Prior Art

A few reports on the influence of SiO₂ on the varistor ceramics can be found in literature. These searches study the influence of SiO₂ with additives mostly above 0.1 % by weight, so that the phase Zn₂SiO₄ was obtained in specimens on the boundaries between the ZnO grains. The results show that addition of SiO₂ inhibits sintering and also the growth of the ZnO grains, which is reflected in higher breakdown voltage of the varistor ceramics. Addition of SiO₂ is also said to reduce evaporation of Bi₂O₃ during sintering. It is also reported that dissolving SiO₂ in Bi₂O₃ reduces the surface tension of Bi₂O₃ and the Bi₂O₃ melt wets the surface of the ZnO grains more equally regardless of a difference in the wettability of the ZnO crystallographic planes with the Bi₂O₃ melt. As far as the I-U characteristics of the varistor ceramics are concerned, the search has proved a positive impact of the additive SiO₂ on the increase in the non-linearity coefficient, reduction in the leakage current and also the stability of the varistor ceramics and its resistance to degradation.

A solution to the leakage current is disclosed in U.S. pat. No. 4,397,773 from 1983 (equivalent CA 1,182,278), where a reduction in nominal voltage and the leakage current of varistors is achieved by adding a few per cent by weight (0.1 to 10 %) of tetragonal antimony zinc oxide (ZnSb₂O₄), by a particle size below 50 µm, and by sintering at a temperature about 1300 °C.

A composition for the manufacturing of varistors having low leakage current is known from Slovene patent No. 9300426 from 1993. The new composition provides for an extremely low leakage current by the fact that the optimized concentrations of Bi₂O₃ (0.5 - 0.6 mol/o) and Sb₂O₃ (0.6 - 0.9 mol/o) and their mutual ratio, without other dopants that would hinder the speed of grain growth, allow low temperature (1100 °C) and short sintering time (60 minutes). An optimized concentration of transition elements MnO (0.8 - 1.3 mol/o) and CoO (0.7 - 0.9 mol/o) and especially increased concentration of Mn over Co provide formation of a hardened and stable potential barrier between the ZnO grains due to increased concentrations of superficial states. The varistors with this composition manufactured by way of various ceramic technologies (dry pressing, thin foil casting) exhibit leakage current density (0.1 uA/cm² at 25 °C), non-linearity coefficient α > 60, energy absorption capacity > 400 J/cm³, withstand maximum current (8/20 us) > 5000 A/cm² and exhibit excellent AC and DC time stability.

U.S. pat. No. 4,371,860 (1983) also refers to a low leakage varistor, wherein the varistor is coated with a silicone protective coating (silicone polyimide).

U.S. pat. Nos. 4,046,847 (1977) and 4,409,728 (1983) also refer to improvement of stability of varistors exposed to voltage surges so that leakage current level is preserved. U.S. pat. No. 4,046,847 discloses a process for manufacturing of varistors, especially heat processing of specimens after they are fired (sintered) at a temperature of at least 1100 °C, said process including:
- cooling down to a temperature below about 400 °C,
- reheating to a temperature up to about 700 °C,
- recooling slowly to a temperature below 400 °C,
- repeating at least once the sequence of reheating and recooling.

The invention primarily refers to disc-shaped varistors having a diameter of about 7 cm and a thickness of about 2 cm and made of varistor ceramics with a composition of ZnO with additives in mol. %: 0.5 Bi₂O₃, 1.0 Sb₂O₃, 0.5 Co₂O₃, 0.5 MnO₂, 0.5 Cr₂O₃, 1.0 NiO, and apart from these conventional dopants also containing 0.1 BaCO₃, 0.1 B₂O₃, 0.003 AI(NO₃)3.9H₂O and also 0.1 SiO₂. The same composition of varistor ceramics only without Al and with a higher addition of SiO₂, 0.25 mol. %, is disclosed in U.S. pat. No. 3,928,245 (1975). Similarly in U.S. pat. No. 4,409,728 which protects a method of making a stable high voltage DC varistor with the same composition and dimensions as in the above-mentioned patent, only that a glass collar is applied on the perimeter; the varistor is also heat treated between about 750 °C and 400 ° C for several cycles in air.

Keneth C. Radford is the author and co-author of several patents for very high energy absorbing varistors containing also SiO₂, such as U.S. pat. No. 5,053,739 (1991), U.S. pat. No. 5,075,666 (1991), U.S. pat. No. 5,037,594 (1991), U.S. pat. No. 5,142,264 (1992), and U.S. pat. No. 5,264,169 (1993). These patents disclose a method for manufacturing varistors or varistor discs by sintering a ZnO mixture in combination with Bi₂O₃, Sb₂O₃, SiO₂, MgO, CaO and smaller levels of other additives such as B, K, Na and Al₂O₃ following a predetermined sintering process.

U.S. pat. No. 5,053,739 (1991) discloses a known method for fabricating varistor discs by sintering at 1300 °C, heat treatment at 200 °C and then at 600 °C, the varistors having the following composition (mol.%): ZnO (up to 100); Bi₂O₃ in the range of 1.0; Sb₂O₃ in the range of 1.0; SiO₂ in the range of 0.25; MgO in the range of 0.5 and CaO in the range of 0.05. U.S. pat. No. 5,075,666 discloses a composition and method for manufacturing varistor discs for high energy absorption by firing at a temperature in the range between 1100 and 1400 °C (2 to 10 hours), preferably at 1300 °C, having the composition: ZnO (up to 100); Bi₂O₃ in a concentration of at least 1.0 and more; Sb₂O₃ in a concentration to reach Sb₂O₃/Bi₂O₃ ratio between 1.2 and 1.5; SiO₂ about 1.0.

U.S. pat. No. 5,142,264 describes a method for producing varistors having high energy absorption by firing at 1300 °C and subsequent heat treatment at 600 °C, wherein apart from the above mentioned dopants Bi₂O₃ about 1.0, Sb₂O₃ about 1.5 and SiO₂ preferably about 0.5 to 1.5 mol %., BaO is added in a concentration of about 0.25 mol. % (0.1 to 1.0). The mixture also includes Co₃O₄, MnO₂, B, K and Al₂O₃.

U.S. pat. No. 5,264,169 discloses a method for manufacturing ZnO varistor discs with improved stability with a mixture from ZnO and Sb₂O₃, MnO₂, Co₃O₄ and SiO₂ with additives Bi₂O₃ (1 to 1.25, 2 or 3 mol.%), B (30 ppm, 200 ppm), Na (200 ppm) and BaO (0.5 mol.%) in various combinations, by firing either at 1100 °C or 1300 °C and subsequent heat treatment at 600 °C and 250 °C.

U.S. pat. No. 5,037,594 refers to a method for making varistor discs with increased high temperature stability, wherein the essence of the invention is cooling from the temperature of firing lying between 1100 and 1300 °C at a predetermined linear rate in the range of 30 to 60 °C per hour.

A varistor composition containing SiO₂ (from 0.1 to 1 mol. %) is described in U.S. pat. No. 6,184,770 B1 (2001) for a monolithic varistor (multilayer chip-type structure) that is calcined at 750 °C, fired at 880 to 900 °C and subsequently additionally heat treated at 600 °C. The ZnO composition of the varistor ceramic includes (in mol.%), 1.0 - 3.0 Bi₂O₃; 0.1 - 1.5 Co₂O₃; 0.1 - 1.0 MnO; Sb₂O₃ and/or SnO₂ 0.1 - 2.0; Y₂O₃ 0 - 3; B₂O₃ 0.1 - 2.0 and 100-350 ppm Al₂O₃.

Unlike the above mentioned patents, U.S. pat. No. 4,374,049 (1983) protects a varistor composition for manufacturing long-term stability varistors not containing BaO and SiO₂, namely ZnO with additives (in mol.%): 0.5 of the oxides of Bi, Co, Mn and Sn; 2.0 Sb₂O₃; 1.00 NiO and 0.01 to 0.1 B₂O₃.

Relevant literature cited below in connection with SiO₂ impact on properties of varistor ceramics reports on higher SiO₂ additives, mostly substantially above 0.1 % by weight (or above 0.15 mol %) when the Zn₂SiO₄ phase is already expressed, which inhibits thickening (sintering) and also grain growth, so that the breakdown voltage of varistor ceramics is increased. The authors of various articles came to a conclusion that the SiO₂ additive increases the non-linearity coefficient of ceramics and improves both its stability and resistance to degradation. They further found that the SiO₂ additive reduces evaporation of Bi₂O₃ and improves the wettability of ZnO grains with the Bi₂O₃ melt.

Published articles are:
- T. R. N. Kutty, S. Ezhilvalavan, The role of silica in enhancing the nonlinearity coefficients by modifying the trap states of zinc oxide ceramic varistor, J. Phys. D: Appl. Phys., 29(1996), 809-819;
- R. Goel, A. Sil, H. R. Anand, Microstructural and electrical characteristics of SiO2 doped ZnO-Bi2O3 varistors, Bull. Mater. Sci., 22(1), (1999), 49-57;
- S. J. So, C. B. Park, Improvement in the electrical stability of semiconducting ZnO ceramic varistors with SiO2 additive, J. Korean Phys. Soc., 40(5), (2002), 925-929;
- Z. H. Wu. Et al., Effect of SiO2 addition on the microstructure and electrical properties of ZnO-based varistors, Int. J. Minerals, Metallurgy and Mater., 17(1), (2010), 86-91;
- T. K. Roy et al., Effect of silica doping on the densification and grain growth in zinc oxide, Ceram. Int., 37, (2011), 2679-2687;
- N. Canikoglu et al., Densification and grain growth of SiO2-doped ZnO, Ceram. Int., 32, (2006), 127-132;
- M. Takada, Y. Sato, S. Yoshikado, Relation between grain boundary structure and electrical degradation in zinc oxide varistors, J. Am. Ceram. Soc., 95 (8), (2012), 2579-2586;
- H. Q. Shao, X. H. Gao, Z. C. Cao, Effect of annealing on phase structure and degradation of a zinc oxide varistor with Si-additive, J. Europ. Cer. Soc., 17(1997), 55-59;
- L. Meng et al., The effect of Bi2O3/SiO2 molar ratio and annealing on the dc degradation of ZnO varistors, J. Am. Cer. Soc., 94(8), (2011), 2300-2303;
- L. Meng et al., Synthesis of novel core-shell nanocomposites for fabricating high breakdown voltage ZnO varistors, J. Mater. Chem., 21, (2011), 11418-11423.H. Kanai, M. Imai, J. Mater. Sci., 23, (1988), 4379-4382;
- M. Peiteado et al., Microstructure Engineering to drastically reduce the leakage current of high voltage ZnO varistor ceramics, J. Am. Cer. Soc., 95(10), (2012), 3043-3049.

### Solution to the Technical Problem

The essence of the method for manufacturing varistor ceramics and varistors having low leakage current of the invention lies in that to a conventional composition of varistor ceramics SiO₂ is added in a range from 0.01 to 0.5, preferably to 0.3 mol. % without affecting the nominal voltage and non-linearity of the varistor ceramics. According to the method, the SiO₂ additives are included in the Bi₂O₃ phase and do not yet cause a formation of the Zn₂SiO₄ phase.

The method for manufacturing varistor ceramics and varistors having low and stable leakage current will be described in the continuation in more detail with reference to the following figures in which:
Figure 1 shows time dependent leakage current in Type A varistors;
Figure 2 shows time dependent leakage current in Type B varistors.

The method of the invention comprises the following steps:
a) manufacturing of a ZnO mixture with addition of oxides (in mol. %):
   - Bi₂O₃ from 0.1 to 1.5;
   - Sb₂O₃ from 0 to 2.0 and/or TiO₂ from 0 to 1.5, wherein at least one, and not more than a total of 1.5 is added;
   - Co₃O₄ from 0.01 to 1.0;
   - Mn₃O₄ from 0.01 to 1.0;
   - NiO from 0.0 to 1.0;
   - Cr₂O₃ from 0 to 1.0;
   - SiO₂ from 0.01 to 0.5, preferably to 0.3;
   - remainder ZnO to 100;
b) compression of a dust mixture;
c) firing at a temperature between 1100 and 1300 °C, preferably between 1150 °C and 1250 °C;
d) rapid cooling to a temperature of 850 °C at a rate of at least 10 °C/min and then slow cooling < 3 °C /min up to a temperature below 200 °C;
e) metallization with Ag electrodes at a temperature below 700 °C, preferably between 550 and 650 °C, and slow cooling < 3 °C/min up to a temperature below 200 °C.

The method for manufacturing varistor ceramics according to an embodiment comprises manufacturing of a varistor mixture, to which an adequate SiO₂ amount is added in various chemical forms such as SiO₂ powder, H₄SiO₄ (SiO₂ in water) or pre-reacted Bi₂O₃ and SiO₂ compounds (Bi₁₂SiO₂₀, Bi₄Si₃O₁₂);

The varistor ceramics having low leakage current of the invention is manufactured by a conventional ceramic method: a series of varistor ceramics specimens is prepared, a high-voltage series with a V1 composition (breakdown voltage about V_{T} = 170 V/mm) and a low-voltage series with a V2 composition (V_{T} = 35 V/mm) with added TiO₂. The specimens are also added SiO₂ in the form of Aerosol or as Si-acid in the amounts ranging from 0 to 7000 ppm (0 to 0.7 % by weight). Disc-shaped specimens having a diameter of Φ = 10 mm and a thickness of d = 1,5 mm were fired in the air at a temperature of 1200 °C for 2 hours. Metallographic specimens were prepared and their microstructure analysed on a scanning electron microscope. To measure the I-U characteristics, the specimens were provided with Ag electrodes by firing at 600 °C. Nominal voltage V_{N} at 1 mA, breakdown voltage per unit of thickness V_{T} (V/mm), and non-linearity coefficient α were determined on the basis of measurements at 1 mA and 10 mA and leakage current was determined at 0.8 V_{N}.

**Table 1: Current-voltage characteristics (I-U) of specimens of varistor ceramics.**

| Composition | SiO₂ (ppm) | V_{T}(v/mm) | α | I_{L} (µA) |
|---|---|---|---|---|
| V1 | 0 | 170 | 46 | 2 |
| | 400 | 175 | 36 | 0.008 |
| | 875 | 181 | 42 | 0.012 |
| | 1750 | 193 | 41 | 0.012 |
| | 3500 | 233 | 43 | 0.02 |
| | 7000 | 268 | 42 | 0.016 |
| V2 | 0 | 35 | 23 | 38 |
| | 400 | 38 | 21 | 0.2 |
| | 875 | 44 | 24 | 0.08 |
| | 1750 | 62 | 22 | 0.11 |

The results in the table clearly show that addition of SiO₂ considerably reduces the leakage current of the varistor ceramics. In varistor ceramics V1 the SiO₂ additive does not have a substantial impact on the breakdown voltage up to the addition of 1750 ppm. Microstructural analyses have shown that at this addition the Zn₂SiO₄ compound already forms at boundaries between the grains and that the optimum amount of the additive is already reached. Based on the results, the SiO₂ additives are justifiable up to max 2000 ppm, whereas optimum levels lie below 1000 ppm.

### Reference example - Type A varistor

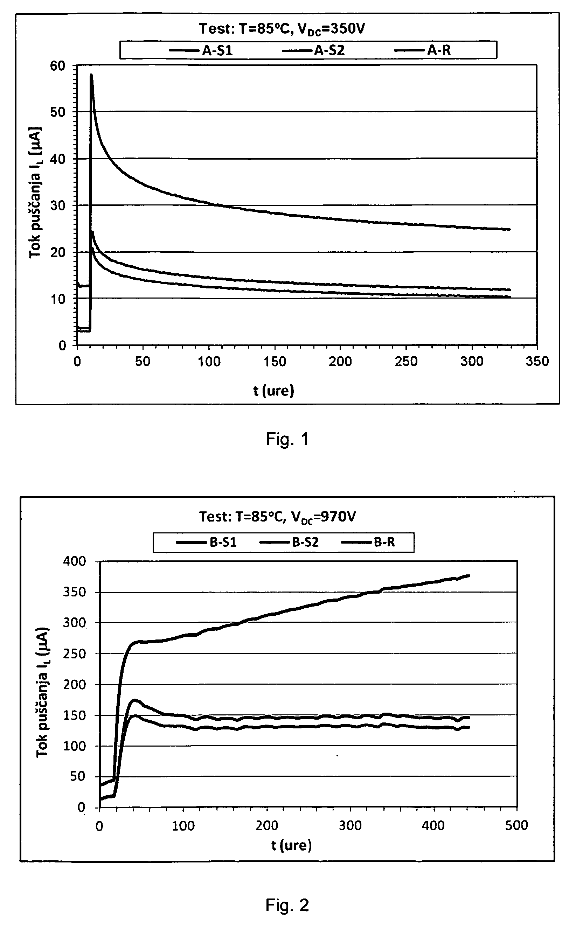

The method of the invention was used to manufacture an A-R varistor, dimensions 40 x 40 mm, thickness 3 mm, with a composition from step a), wherein ZnO represents at least 94 mol. % and the additives no more than 6 mol. % and the additives are the oxides of Bi, Sb, Co, Mn and Ni, without addition of the oxide of Si. Firing was carried out at 1180 °C and took 2 hours, and metallization with Ag electrodes was carried out at 650 °C. The varistor so manufactured has nominal voltage U_{N} (1 mA) 431 V, non-linearity coefficient 37 and leakage current at 0,75 U_{N} at 13 µA (Table 2). A trial of the varistor at a temperature of 85 °C under DC voltage of 350 V has shown that after about 10 hours leakage current I_{L} strongly increases to values close to 60 µA and decreases after 100 hours to a value of about 30 µA, after 300 hours it stabilized at values of about 25 µA (Figure 1).

### Embodiment 1 - Type A varistor

The method of the invention was used to manufacture an A-S1 varistor, dimensions 40 x 40 mm, thickness 3 mm, with a composition from step a), wherein ZnO represents at least 94 mol. % and the additives no more than 6 mol. % and the additives are the oxides of Bi, Sb, Co, Mn and Ni and all were added in the same amounts as in the reference varistor A-R, and also with addition of the oxide of SiO₂ in the amount of 0.13 mol.%, by which amount the ZnO amount is reduced. Firing was carried out at 1180 °C and took 2 hours, metallization with Ag electrodes was carried out at 650 °C. The varistor so manufactured has nominal voltage U_{N} (1 mA) 433 V, non-linearity coefficient 35 and leakage current at 0,75 U_{N} at 4 µA (Table 2). A trial of the varistor at a temperature of 85 °C under DC voltage of 350 V has shown that after about 10 hours leakage current I_{L} increases to values close to 24 µA, then decreases after 100 hours to a value of about 15 µA, after 300 hours it stabilized at values of about 12 µA (Figure 1).

### Embodiment 2 - Type A varistor

The method of the invention was used to manufacture an A-S2 varistor, dimensions 40 x 40 mm, thickness 3 mm, with a composition from step a), wherein ZnO represents at least 94 mol. % and the additives no more than 6 mol. % and the additives are the oxides of Bi, Sb, Co, Mn and Ni and all were added in the same amounts as in the reference varistor A-R, and also with addition of the oxide of SiO₂ in the amount of 0.26 mol.%, by which amount the ZnO amount is reduced. Firing was carried out at 1180 °C and took 2 hours, metallization with Ag electrodes was carried out at 650 °C. The varistor so manufactured has nominal voltage U_{N} (1 mA) 442 V, non-linearity coefficient 38 and leakage current at 0,75 U_{N} at 3 µA (Table 2). A trial of the varistor at a temperature of 85 °C under DC voltage of 350 V has shown that after about 10 hours leakage current I_{L} increases to values close to 21 µA, then decreases after 100 hours to a value of about µA, after 300 hours it stabilized at values of about 11 µA (Figure 1).

### Reference example - Type B varistor

The method of the invention was used to manufacture a B-R varistor, dimensions φ = 80 mm, thickness 11 mm, with a composition from step a), wherein ZnO represents at least 95 mol. % and the additives no more than 5 mol. % and the additives are the oxides of Bi, Sb and Ti, Co, Mn and Ni, without the additive of the oxide of Si. Firing was carried out at 1230 °C and took 2.5 hours, metallization with Ag electrodes was carried out at 650 °C. The varistor so manufactured has nominal voltage U_{N} (1 mA) 1185 V, non-linearity coefficient 29 and leakage current at 0,75 U_{N} at 37 µA (Table 1). A trial of the varistor at a temperature of 85 °C under DC voltage of 970 V has shown that after about 20 hours leakage current I_{L} strongly increases to values of about 270 µA, then increases with time equally and increases after 400 hours to a value of 3755 µA and has a tendency of further increasing (Figure 2).

### Embodiment 1 - Type B varistor

The method of the invention was used to manufacture a B-S1 varistor, dimensions φ = 80 mm, thickness 11 mm, with a composition from step a), wherein ZnO represents at least 95 mol. % and the additives no more than 5 mol. % and the additives are the oxides of Bi, Sb and Ti, Co, Mn and Ni, and are all added in the same amounts as in the reference varistor B-R, and also with the additive of the oxide of Si in an amount of 0.06 mol. %, by which amount the ZnO amount is reduced. Firing was carried out at 1230 °C and took 2.5 hours, metallization with Ag electrodes was carried out at 650 °C. The varistor so manufactured has nominal voltage U_{N} (1 mA) 1198 V, non-linearity coefficient 28 and leakage current at 0,75 U_{N} at 15 µA (Table 1). A trial of the varistor at a temperature of 85 °C under DC voltage of 970 V has shown that after about 20 hours leakage current I_{L} increases to values of about 175 µA, then decreases and stabilized at a value closely below 150 µA, and this value is preserved also after 400 hours and more (Figure 2).

### Embodiment 2 - Type B varistor

The method of the invention was used to manufacture a B-S2 varistor, dimensions φ = 80 mm, thickness 11 mm, with a composition from step a), wherein ZnO represents at least 95 mol. % and the additives no more than 5 mol. % and the additives are the oxides of Bi, Sb and Ti, Co, Mn and Ni, and are all added in the same amounts as in the reference varistor B-R, and also with the additive of the oxide of Si in an amount of 0.13 mol. %, by which amount the ZnO amount is reduced. Firing was carried out at 1230 °C and took 2.5 hours, metallization with Ag electrodes was carried out at 650 °C. The varistor so manufactured has nominal voltage U_{N} (1 mA) 1211 V, non-linearity coefficient 31 and leakage current at 0,75 U_{N} at 15 µA (Table 1). A trial of the varistor at a temperature of 85 °C under DC voltage of 970 V has shown that after about 20 hours leakage current I_{L} increases to values up to about 150 µA, then decreases and stabilized at a value of 130 µA, and this value is preserved also after 400 hours and more (Figure 2).

**Table 2: Characteristics of Type A and Type B varistors.**

| Specimen | SiO₂ (mol. %) | U_{N} (1mA) | α | I_{L} (µA) t=0 | I_{L} (µA) t=100 | I_{L} (µA) t=200 | I_{L} (µA) t=300 |
|---|---|---|---|---|---|---|---|
| A-R | 0 | 431 | 37 | 13.4 | 30.6 | 27 | 25.5 |
| A-S1 | 0.13 | 433 | 35 | 3.9 | 14.6 | 13 | 12.2 |
| A-S2 | 0.26 | 442 | 38 | 3.3 | 12.3 | 11.2 | 10.6 |
| B-R | 0 | 1185 | 29 | 37.2 | 279 | 311.6 | 341.6 |
| B-S1 | 0.06 | 1198 | 28 | 15.4 | 150 | 146.8 | 147.7 |
| B-S2 | 0.13 | 1211 | 31 | 14.8 | 132 | 131.5 | 131.9 |

The essence of the invention is the method for manufacturing varistor ceramics with addition of very low amounts of SiO₂ which decreases leakage current by at least one order of magnitude by addition of SiO₂ compared to the same composition without SiO₂. The leakage current is thus smaller by 10-times and more, whereas the nominal voltage and the non-linearity coefficient are not considerably affected. This solves the problem that the nominal voltage and non-linearity considerably change if various additives are added. As far as manufacturers are concerned, this problem is also linked to dimensions or the thickness of the varistor having certain nominal voltage.

## Claims

1. A method for manufacturing varistor ceramics and varistors having low and stable leakage current **characterized in that** it comprises the following steps:
a) manufacturing of a ZnO mixture with addition of oxides (in mol. %):
• Bi₂O₃ from 0.1 to 1.5;
• Sb₂O₃ from 0 to 2.0 and/or TiO₂ from 0 to 1.5, wherein at least one, and not more than a total of 1.5 is added;
• Co₃O₄ from 0.01 to 1.0;
• Mn₃O₄ from 0.01 to 1.0;
• NiO from 0.0 to 1.0;
• Cr₂O₃ from 0 to 1.0;
• SiO₂ from 0.01 to 0.5;
• remainder ZnO to 100;
b) compression of a dust mixture;
c) firing at a temperature between 1100 and 1300 °C, preferably between 1150 °C and 1250 °C;
d) rapid cooling to a temperature of 850 °C at a rate of at least 10 °C/min and then slow cooling < 3 °C /min up to a temperature below 200 °C;
e) metallization with Ag electrodes at a temperature below 700 °C, preferably between 550 and 650 °C, and slow cooling < 3 °C/min up to a temperature below 200 °C.

2. The method according to claim 1 **characterized in that** to a composition of varistor ceramics SiO₂ is added in an amount of 0.03.

3. The method according to claim 1 or 2 **characterized in that** it comprises manufacturing of a varistor mixture, to which an adequate SiO₂ amount is added in various chemical forms such as SiO₂ powder, H₄SiO₄ (SiO₂ in water) or pre-reacted Bi₂O₃ and SiO₂ compounds (Bi₁₂SiO₂₀, Bi₄Si₃O₁₂).

4. A varistor having low and stable leakage current **characterized in that** in the composition ZnO represents at least 94 mol. % and the additives not more than 6 mol. % and the additives are the oxides of Bi, Sb, Co, Mn and Ni, without addition of the oxide of Si; that firing is carried out between 1100 °C and 1300 °C, preferably between 1150 °C and 1250 °C and takes 2 hours, and metallization with Ag electrodes is carried out at 650 °C.

5. The varistor having low and stable leakage current according to claim 4 **characterized in that** the additives of the oxides of Bi, Sb, Co, Mn and Ni with addition of the oxide of SiO₂ are in an amount of 0.13 mol.%, by which amount the ZnO amount is reduced; that firing is carried out at 1180 °C and takes 2 hours, and metallization with Ag electrodes is carried out at 650 °C.

6. The varistor having low and stable leakage current according to claim 4 **characterized in that** the additives of the oxides of Bi, Sb, Co, Mn and Ni with addition of the oxide of SiO₂ are in an amount of 0.26 mol. %, by which amount the ZnO amount is reduced; that firing is carried out at 1180 °C and takes 2 hours, and metallization with Ag electrodes is carried out at 650 °C.

7. The varistor having low and stable leakage current **characterized in that** in the composition ZnO represents at least 95 mol. % and the additives not more than 5 mol. % and the additives are the oxides of Bi, Sb and Ti, Co, Mn and Ni, without addition of the oxide of Si; that firing is carried out at 1230 °C and takes 2.5 hours, and metallization with Ag electrodes is carried out at 650 °C.

8. The varistor having low and stable leakage current according to claim 7 **characterized in that** the additives of the oxides of Bi, Sb and Ti, Co, Mn and Ni with addition of the oxide of Si are in an amount of 0.06 mol. %, by which amount the ZnO amount is reduced; that firing is carried out at 1230 °C and takes 2.5 hours, and metallization with Ag electrodes is carried out at 650 °C.

9. The varistor having low and stable leakage current according to claim 7 **characterized in that** the additives of the oxides of Bi, Sb and Ti, Co, Mn and Ni with addition of the oxide of Si are in an amount of 0.13 mol. %, by which amount the ZnO amount is reduced; that firing is carried out at 1230 °C and takes 2.5 hours, and metallization with Ag electrodes is carried out at 650 °C.
